# EUROPÄISCHE PATENTSCHRIFT

(11) **EP 2 084 429 B1**
(45) Veröffentlichungstag und Bekanntmachung des Hinweises auf die Patenterteilung: **20.04.2011**
(21) Anmeldenummer: 07822083.7
(22) Anmeldetag: 31.10.2007
(51) Int. Cl.: F16H 25/22

(54) **KUGELGEWINDETRIEB**
BALL SCREW
VIS À BILLES

(30) Priorität: 02.11.2006 DE 102006051639
(43) Veröffentlichungstag der Anmeldung: 05.08.2009
(73) Patentinhaber: Schaeffler Technologies GmbH & Co. KG, 91074 Herzogenaurach (DE)
(72) Erfinder: OSTERLAENGER, Juergen, 91448 Emskirchen (DE); ADLER, Dieter, 91074 Herzogenaurach (DE); MAYER, Ralf, 91074 Herzogenaurach (DE)
(86) Internationale Anmeldenummer: PCT/EP2007/061736
(87) Internationale Veröffentlichungsnummer: WO 2008/053010

(56) Entgegenhaltungen:
- WO-A-2004/055416
- DE-A1- 19 526 727
- DE-U1- 9 105 795
- US-A- 3 661 030

## Beschreibung

Die vorliegende Erfindung betrifft einen Kugelgewindetrieb mit einer auf einer Spindel angeordneten Kugelmutter. Kugelgewindetriebe wandeln eine drehende in eine translatorische Bewegung um. Sie werden im Maschinenbau und zunehmend auch im Automobilbau in der Fahrwerktechnik eingesetzt.

Aus DE 195 26 727 B4 ist ein Kugetgewindetrieb nach den Merkmalen des Oberbegriffs der Ansprüche 1 und 7 bekannt geworden. Die kreisbogenförmig gebogene Klammer greift in eine Rille ein, die an der Kugelmutter ausgebildet ist. Wenn die Klammer ihre Elastizität verliert, ist ein einwandfreies Halten des Umlenkstücks nicht mehr gewährleistet und außerdem kann die Klammer von der Kugelmutter abfallen.

Aufgabe der vorliegenden Erfindung ist es, einen Kugelgewindetrieb anzugeben, der ein einwandfreies Halten des Umlenkstücks an dem Mutterteil gewährleistet.

Erfindungsgemäß wird diese Aufgabe dadurch gelöst, dass die Klammer an wenigstens einem Klammerschenkel einen ersten federnd gespannten Abschnitt und einen von dem ersten Abschnitt durch einen Schlitz getrennten zweiten Abschnitt aufweist, wobei der erste Abschnitt das Umlenkstück an das Mutterteil anfedert und wobei der zweite Abschnitt die Klammer verliersicher an dem Umlenkstück hält. Die erfindungsgemäße Klammer bietet den Vorteil der Funktionstrennung, nämlich in einen Klemmbereich und in einem Schnappbereich. Der Klemmbereich stellt sicher, dass das Umlenkstück einwandfrei an dem Mutterteil gehalten ist. Der Schnappbereich stellt sicher, dass die Klammer vor Verlieren gesichert ist. Diese beiden Bereiche sind durch die Schlitze voneinander getrennt. Diese Funktionstrennung ist sowohl aus spannungstechnischer Sicht wie auch aus funktioneller Sicht sinnvoll. Fertigungstoleranzen der Umlenkstücke sowie der Klammer selbst üben somit keine Beeinträchtigung auf die beiden Hauptfunktionen aus. Ohne diese Funktionstrennung wäre entweder das Klemmen in Umfangsrichtung oder das Sichern gegen Verlieren nicht einwandfrei zu gewährleisten, weil zum Beispiel die zulässigen Spannungen überschritten werden, und/oder die Feder plastifiziert.

Der zweite Abschnitt des Klammerschenkels kann eine hakenförmige Kontur aufweisen und mit dieser hakenförmigen Kontur einen an dem Umlenkstück ausgebildeten Umgriff umgreifen. Auf diese Weise kann eine einwandfreie verliersichere Verbindung zwischen der Klammer und dem Umlenkstück gewährleistet werden.

Zwischen umfangsseitig einander zugewandten Enden von zwei am Umfang des Mutterteils hintereinander angeordneten Umlenkstücken kann jeweils ein Spalt ausgebildet sein. Dieser Spalt stellt sicher, dass mittels der Klammer beide Umlenkstücke einwandfrei an das Mutterteil angedrückt oder angefedert werden können, ohne dass die Enden der Umlenkstücke zuvor zusammenstoßen.

Vorzugsweise können zwei umfangsseitig hintereinander angeordnete Umlenkstücke jeweils mit den Umgriffen versehen sein, wobei am Umfang der Kugelmutter vorzugsweise gegenüberliegend angeordnete Klammern mit ihren einen Klammerschenkeln die Umgriffe des einen Umlenkstücks und mit ihren anderen Klammerschenkeln die Umgriffe des anderen Umlenkstückes umgreifen. Beispielsweise können zwei Umlenkstücke mit zwei Klammern einwandfrei an dem Mutterteil gehalten werden, wobei zugleich eine verliersichere Halterung der Klammern an den Umlenkstücken gewährleistet ist.

Vorzugsweise sind die ersten Abschnitte der Klammerschenkel beider Klammern federnd gespannt und umgreifen die Umgriffe der Umlenkstücke, sodass beide Umlenkstücke an das Mutterteil angefedert sind.

Die zweiten Abschnitte der Klammerschenkel beider Klammern können mit hakenförmigen Konturen mit an den Umlenkstücken ausgebildeten Rasten oder Hintergriffen verrasten.

Die ersten oder auch die zweiten Abschnitte der Klammerschenkel können jeweils mit Einführungsschrägen versehen sein, zum Aufschieben auf die Umgriffe der Umlenkstücke. Auf diese Weise können die Klammern durch radiales Aufschieben auf die Umgriffe montiert werden, wobei die zweiten Abschnitte mit ihren hakenförmigen Konturen mit den Rasten verrasten oder auch Einschnappen.

Vorzugsweise ist die Klammer innerhalb eines durch den Außenumfang der Umlenkstücke begrenzten Hüllkreises angeordnet. Auf diese Weise kann eine vergrößerung des radialen Bauraums vermieden werden. Beispielsweise kann die Klammer u-förmig ausgebildet sein.

Vorzugsweise ist die Klammer aus einem federharten Material hergestellt. Hier bieten sich vorzugsweise Federbleche an.

Eine alternative erfindungsgemäße Ausführung sieht vor, dass zwei am Umfang des Mutterteils hintereinander angeordnete Umlenkstücke an ihren einander zugewandten Enden jeweils einen Umgriff aufweisen, wobei am Umfang der Kugelmutter verteilt angeordnete Klammern mit ihren einen Klammerschenkeln die Umgriffe des einen Umlenkstücks und mit ihren anderen Klammerschenkeln die Umgriffe des anderen Umlenkstücks umgreifen. Auch mit diesem erfindungsgemäßen Kugelgewindetrieb ist sichergestellt, dass zum Beispiel zwei Klammern die beiden Umlenkstücke einwandfrei an dem Mutterteil halten.

Ebenso wie bei der ersten erfindungsgemäßen Alternative können die Klammerschenkel jeweils einen ersten federnd gespannten Abschnitt und einen von dem ersten Abschnitt durch einen Schlitz getrennten zweiten Abschnitt aufweisen, wobei die ersten Abschnitte die Umlenkstücke an das Mutterteil anfedern, und wobei die zweiten Abschnitte die Klammern verliersicher an den Umlenkstücken halten.

Die Klammern können an ihren Klammerschenkeln jeweils einen ersten federnd gespannten Abschnitt und einen an dem ersten Abschnitt durch einen Schlitz getrennten zweiten Abschnitt aufweisen, wobei die ersten Abschnitte die Umlenkstücke an das Mutterteil anfedern, und wobei die zweiten Abschnitte die Klammern verliersicher an den Umlenkstücken halten.

Nachstehend wird die Erfindung anhand eines in insgesamt vier Figuren abgebildeten Ausführungsbeispieles näher erläutert. Es zeigen:
- Figur 1: eine Ansicht eines erfindungsgemäßen Kugelgewinde- triebs,
- Figur 2: einen Querschnitt durch den Kugelgewindetrieb aus Figur 1,
- Figur 3: eine Einzelheit aus Figur 2 in vergrößerter Darstellung und
- Figur 4: ein Einzelteil des Kugelgewindetriebs aus Figur 1.

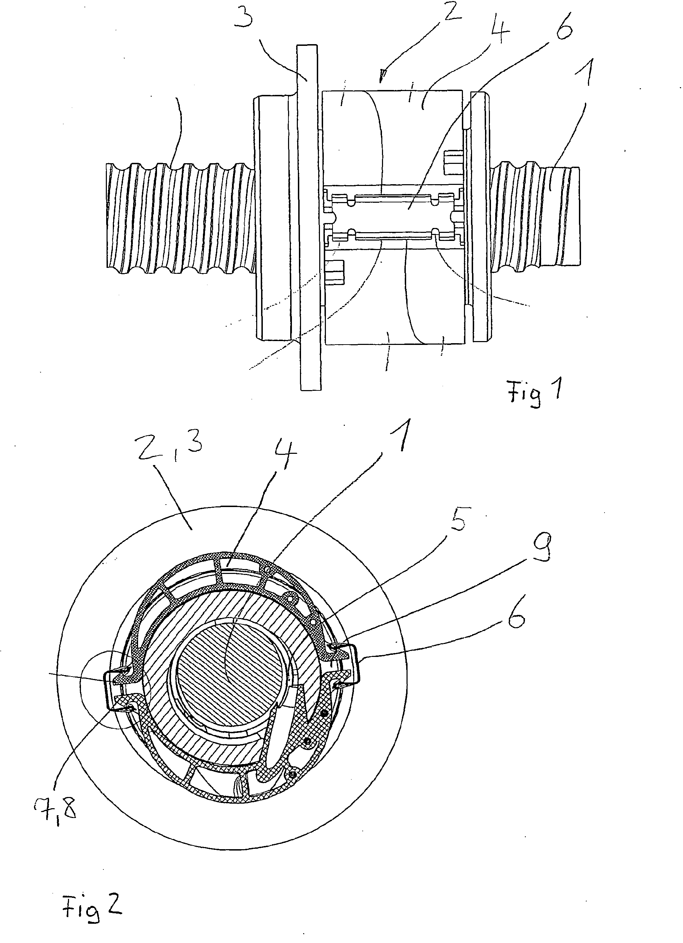

Der in Figur 1 abgebildete erfindungsgemäße Kugelgewindetrieb weist eine auf einer Spindel 1 angeordnete Kugelmutter 2 auf, die ein Mutterteil 3 und zwei am Umfang der Kugelmutter 2 hintereinander angeordnete Umlenkstücke 4 aufweist. In bekannter Weise begrenzen die Kugelmutter 2 und die Spindel 1 endlose Kugelkanäle 5, in denen hier nicht abgebildete Kugeln endlos umwälzen. Den Umlenkstücken 4 kommt dabei in bekannter Weise die Aufgabe zu, die Kugeln aus einem Ende des Kugelkanals zu einem Anfang dieses Kugelkanals umzulenken. Bei dem vorliegenden erfindungsgemäßen Kugelgewindetrieb sind zwei endlose Kugelkanäle 5 ausgebildet, wobei jedem endlosen Kugelkanal 5 ein Umlenkstück 4 zugeordnet ist.

Figur 2 zeigt im Querschnitt einen Einlauf bzw. einen Auslauf des Umlenkstücks 4 für die Kugeln.

Damit der Übergang des Kugelkanals 5 von dem Mutterteil 3 zu dem Umlenkstück 4 glatt ausgebildet ist, sind die Umlenkstücke 5 einwandfrei an dem Mutterteil 3 gehalten und positioniert. Zu diesem Zweck sind zwei Klammern 6 vorgesehen, die auf die beiden Umlenkstücke 4 aufgeklammert sind und diese gegen das Mutterteil 3 anfedern.

Der Figur 2 kann entnommen werden, dass die beiden umfangsseitig hintereinander angeordneten etwa bogenförmigen Umlenkstücke 4 einander zugewandte Enden aufweisen, wobei die umfangsseitigen Enden beider Umlenkstücke 4 als radial auswärts gerichtete Haken 7 ausgebildet sind, die zugleich jeweils einen Umgriff 8 darstellen, der von den Klammern 6 umgriffen werden kann. Der Figur 2 ist ferner zu entnehmen, dass zwischen den einander zugewandten Enden beider Umlenkstücke 4 jeweils ein Spalt 9 ausgebildet ist. Der Spalt 9 gewährleistet ein einwandfreies Anfedern der Umlenkstücke 4 gegen das Mutterteil 3, ohne dass die beiden Umlenkstücke 4 miteinander in Kontakt geraten, bevor sie einwandfrei an dem Mutterteil 3 positioniert und angefedert sind. Die Klammern 6 liegen innerhalb eines Hüllkreises, der die Umlenkstücke 4 einhüllt.

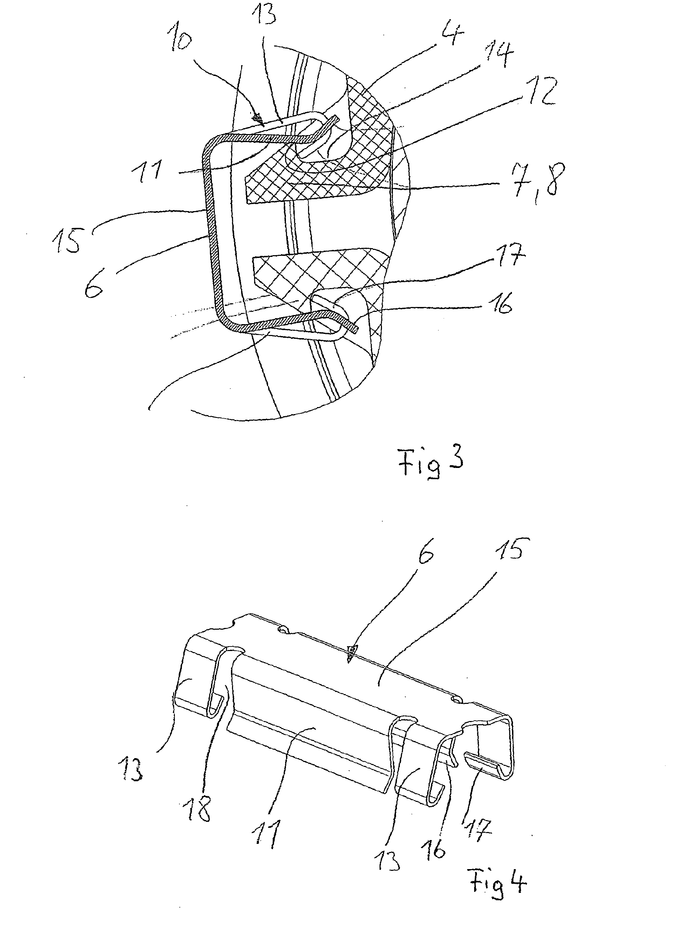

Figur 3 zeigt in vergrößerter Darstellung eine Einzelheit aus Figur 2, in der insbesondere die Haken 7 der beiden Umlenkstücke 4 und die Klammer 6 abgebildet sind. Dieser Darstellung ist zu entnehmen, dass die Klammer 6 zwei Klammerschenkel 10 aufweist, wobei der eine Klammerschenkel 10 den Umgriff 8 des einen Umlenkstücks 4 und wobei der andere Klammerschenkel 10 den Umgriff 8 des anderen Umlenkstücks 4 umgreift. Jeder Klammerschenkel weist zwei Abschnitte auf. Der erste Abschnitt 11 ist federnd vorgespannt und greift an einer Hakenspitze 12 des Hakens 7 an. Der zweite Abschnitt 13 weist eine hakenförmige Kontur auf, wobei dieser zweite Abschnitt in einen Hintergriff 14 des Hakens 7 eingreift bzw. einrastet. Die beiden Klammerschenkel 10 sind über einen Klammerrücken 15 einstückig miteinander verbunden. Durch den Eingriff des hakenförmigen zweiten Abschnitts 13 in den Hintergriff 14 ist gewährleistet, dass die Klammern 6 verliersicher mit den Umlenkstücken 4 verbunden sind. Die federnd vorgespannten ersten Abschnitte 11 der Klammerschenkel 10 sind so gegen die Hakenspitzen 12 der Umgriffe 8 bzw. Haken 7 angefedert, dass die Umlenkstücke 4 einwandfrei gegen das Mutterteil 3 angedrückt oder angefedert sind.

Der Figur 3 ist ferner zu entnehmen, dass beiden Abschnitte 11, 13 der Klammerschenkel 10 an ihren freien Enden mit Einführungsschrägen 16, 17 versehen sind, so dass ein einwandfreies radiales Aufschieben der Klammern 6 auf die Umgriffe 8 gewährleistet ist. Während des radialen Aufschiebens kommen die Einführungsschrägen 16, 17 am rampenfömigen Haken 7 zur Anlage, wobei unter weiterem radialen Aufschieben die Einführungsschrägen entlang dem Haken 7 gleiten, unter gleichzeitiger Aufweitung der Klammerschenkel 10. Schließlich gelangen die Einführungsschrägen 16, 17 in den Bereich des Hintergriffs 14. In dieser Situation ist ein Teil der Áufweitung der Klammerschenkel 10 als Folge elastischer Entspannung zurückgenommen. Allerdings sind in dieser Einbausituation die ersten Abschnitte der Klammerschenkel 10 immer noch federnd vorgespannt.

Figur 4 zeigt in perspektivischer Darstellung die Klammer 6. Die Klammer 6 ist in diesem Ausführungsbeispiel aus dünnem Federblech hergestellt. Deutlich zu erkennen sind Schlitze 18 zwischen den ersten Abschnitten 11 und den zweiten Abschnitten 13 der Klammerschenkel 10. Diese Schlitze stellen sicher, dass die Funktionen der beiden Abschnitte 11, 13 voneinander getrennt sind. Das bedeutet, dass in der Einbaulage zwar die ersten Abschnitte 11 noch federnd vorgespannt sein können, die zweiten Abschnitte 13 jedoch entspannt sein können, aber nicht entspannt sein müssen.

Diese Klammer 6 ermöglicht somit zwei voneinander unabhängige Funktionen: Zum einen gewährleisten die ersten Abschnitte 11 ein einwandfreies Halten bzw. Anfedern der Umlenkstücke 4 an das Mutterteil 3, zum anderen gewährleisten die zweiten Abschnitte 13 ein verliersicheres Halten der Klammern 6 an den beiden Umlenkstücken 4, ohne dass sich die beiden Abschnitte gegenseitig in ihrer Funktion behindern oder beeinflussen. Im Ausführungsbeispiel ist die Klammer aus Blech etwa u-förmig gebogen, wobei die freien Enden der Klammerschenkel 10 an beiden Abschnitten 11, 13 schräg beispielsweise durch Biegen abgewinkelt sind, um die Einführungsschrägen 16, 17 zu bilden.

### Bezugszahlenliste

- 1: Spindel
- 2: Kugelmutter
- 3: Mutterteil
- 4: Umlenkstück
- 5: Kugelkanal
- 6: Klammer
- 7: Haken
- 8: Umgriff
- 9: Spalt
- 10: Klammerschenkel
- 11: erster Abschnitt
- 12: Hakenspitze
- 13: zweiter Abschnitt
- 14: Hintergriff
- 15: Klammerrücken
- 16: Einführungsschräge
- 17: Einführungsschräge
- 18: Schlitz

## Patentansprüche

1. Kugelgewindetrieb, mit einer auf einer Spindel (1) angeordneten Kugelmutter (2), die ein Mutterteil (3) und ein Umlenkstück (4) aufweist, wobei das Umlenkstück (4) Kugeln aus einem Ende eines von der Kugelmutter (2) und der Spindel (1) begrenzten endlosen Kugelkanals (5) zu einem Anfang des Kugelkanals (5) umlenkt, wobei das Umlenkstück (4) über eine Klammer (6) an dem Mutterteil (3) gehalten ist, **dadurch gekennzeichnet, dass** die Klammer (6) an wenigstens einem Klammerschenkel (10) einen ersten federnd gespannten Abschnitt (11) und einen von dem ersten Abschnitt (11) durch einen Schlitz (18) getrennten zweiten Abschnitt (13) aufweist, wobei der erste Abschnitt (11) das Umlenkstück (4) an das Mutterteil (3) anfedert, und wobei der zweite Abschnitt (13) die Klammer (6) verliersicher an dem Umlenkstück (4) hält.

2. Kugelgewindetrieb nach Anspruch 1, bei der der zweite Abschnitt (13) des Klammerschenkels (10) eine hakenförmige Kontur aufweist und mit dieser hakenförmigen Kontur einen an dem Umlenkstück (4) ausgebildeten Umgriff (8) umgreift.

3. Kugelgewindetrieb nach Anspruch 2, bei dem zwischen umfangsseitig einander zugewandten Enden von zwei am Umfang des Mutterteils (3) hintereinander angeordneten Umlenkstücken (4) jeweils ein Spalt (9) ausgebildet ist.

4. Kugelgewindetrieb nach Anspruch 2, bei zwei umfangsseitig hintereinander angeordnete Umlenkstücke (4) jeweils mit den Umgriffen (8) versehen sind, wobei am Umfang der Kugelmutter (2) vorzugsweise gegenüberliegend angeordnete Klammern (6) mit ihren einen Klammerschenkeln (10) die Umgriffe (8) des einen Umlenkstücks (4) und mit ihren anderen Klammerschenkeln (10) die Umgriffe (8) des anderen Umlenkstücks (4) umgreifen.

5. Kugelgewindetrieb nach Anspruch 4, bei dem die ersten Abschnitte (11) der Klammerschenkel (10) beider Klammern (6) federnd gespannt sind und die Umgriffe (8) der Umlenkstücke (4) umgreifen, wobei beide Umlenkstücke (4) an das Mutterteil (3) angefedert sind.

6. Kugelgewindetrieb nach Anspruch 4, bei dem die zweiten Abschnitte (13) der Klammerschenkel (10) beider Klammern (6) mit ihren hakenförmigen Konturen mit an den Umlenkstücken (4) ausgebildeten Rasten verrasten.

7. Kugelgewindetrieb, mit einer auf einer Spindel (1) angeordneten Kugelmutter (2), die ein Mutterteil (3) und ein Umlenkstück (4) aufweist, wobei das Umlenkstück (4) Kugeln aus einem Ende eines von der Kugelmutter (2) und der Spindel (1) begrenzten endlosen Kugelkanals (5) zu einem Anfang des Kugelkanals (5) umlenkt, wobei das Umlenkstück (4) über eine Klammer (6) an dem Mutterteil (3) gehalten ist, **dadurch gekennzeichnet, dass** zwei am Umfang des Mutterteils (3) hintereinander angeordnete Umlenkstücke (4) an ihren einander zugewandten Enden jeweils einen Umgriff (8) aufweisen, wobei am Umfang der Kugelmutter (2) verteilt angeordnete Klammern (6) mit ihren einen Klammerschenkeln (10) die Umgriffe (8) des einen Umlenkstücks (4) und mit ihren anderen Klammersühenkeln (10) die Umgriffe (8) des anderen Umlenkstücks (4) umgreifen.

8. Kugelgewindetrieb nach Anspruch 7, bei dem die Klammerschenkel (10) jeweils einen ersten federnd gespannten Abschnitt (11) und einen von dem ersten Abschnitt (11) durch einen Schlitz (18) getrennten zweiten Abschnitt (13) aufweisen, wobei die ersten Abschnitte (11) die Umlenkstücke (4) an das Mutterteil (3) anfedern, und wobei die zweiten Abschnitte (13) die Klammern (6) verliersicher an den Umlenkstücken (4) halten.

9. Kugelgewindetrieb nach Anspruch 7, bei dem die Klammern (6) an ihren Klammerschenkeln (10) jeweils einen ersten federnd gespannten Abschnitt (11) und einen von dem ersten Abschnitt durch einen Schlitz (18) getrennten zweiten Abschnitt (13) aufweisen, wobei die ersten Abschnitte (11) die Umlenkstücke (4) an das Mutterteil (3) anfedern, und wobei die zweiten Abschnitte (13) die Klammer (6) verliersicher an den Umlenkstücken (4) halten.

10. Kugelgewindetrieb nach Anspruch 1 oder 8, bei dem die ersten und die zweiten Abschnitte (11, 13) der Klammerschenkel (10) jeweils mit Einführungsschrägen (16, 17) versehen sind, zum Aufschieben auf die Umgriffe (8) der Umlenkstücke (4).

11. Kugelgewindetrieb nach Anspruch 1 oder 7, bei dem die Klammer (6) innerhalb eines durch den Außenumfang der Umlenkstücke (4) begrenzten Hüllkreises angeordnet sind.

12. Kugelgewindetrieb nach Anspruch 1 oder 7, bei dem die Klammer (6) aus einem federharten Material hergestellt ist.

## Claims

1. Ball screw, with a ball nut (2) which is arranged on a spindle (1) and has a nut part (3) and a deflection piece (4), the deflection piece (4) deflecting balls out of one end of an endless ball channel (5), delimited by the ball nut (2) and the spindle (1), to a start of the ball channel (5), the deflection piece (4) being held on the nut part (3) via a clip (6), **characterized in that** the clip (6) has, on at least one clip leg (10), a first resiliently tensioned portion (11) and a second portion (13) separated from the first portion (11) by a slot (18), the first portion (11) springing the deflection piece (4) onto the nut part (3), and the second portion (13) holding the clip (6) captively on the deflection piece (4).

2. Ball screw according to Claim 1, in which the second portion (13) of the clip leg (10) has a hook-shaped contour and engages with this hook-shaped contour around an engagement (8) formed on the deflection piece (4).

3. Ball screw according to Claim 2, in which a gap (9) is formed in each case between circumferentially mutually confronting ends of two deflection pieces (4) arranged one behind the other on the circumference of the nut part (3).

4. Ball screw according to Claim 2, in which two circumferentially successively arranged deflection pieces (4) are provided in each case with the engagements (8), preferably oppositely arranged clips (6) engaging with their one set of clip legs (10) around the engagements (8) of one deflection piece (4) and with their other set of clip legs (10) around the engagements (8) of the other deflection piece (4).

5. Ball screw according to Claim 4, in which the first portions (11) of the clip legs (10) of the two clips (6) are resiliently tensioned and engage around the engagements (8) of the deflection pieces (4), both deflection pieces (4) being sprung onto the nut part (3).

6. Ball screw according to Claim 4, in which the second portions (13) of the clip legs (10) of the two clips (6) latch with their hook-shaped contours together with catches formed on the deflection pieces (4).

7. Ball screw, with a ball nut (2) which is arranged on a spindle (1) and has a nut part (3) and a deflection piece (4), the deflection piece (4) deflecting balls out of one end of an endless ball channel (5), delimited by the ball nut (2) and the spindle (1), to a start of the ball channel (5), the deflection piece (4) being held on the nut part (3) via a clip (6), **characterized in that** two deflection pieces (4) arranged successively on the circumference of the nut part (3) have in each case an engagement (8) at their mutually confronting ends, clips (6) arranged so as to be distributed on the circumference of the ball nut (2) engaging with their one set of clip legs (10) around the engagements (8) of one deflection piece (4) and with their other set of clip legs (10) around the engagements (8) of the other deflection piece (4).

8. Ball screw according to Claim 7, in which the clip legs (10) have in each case a first resiliently tensioned portion (11) and a second portion (13) separated from the first portion (11) by a slot (18), the first portions (11) springing the deflection pieces (4) onto the nut part (3), and the second portions (13) holding the clips (6) captively on the deflection pieces (4).

9. Ball screw according to Claim 7, in which the clips (6) have on their clip legs (10) in each case a first resiliently tensioned portion (11) and a second portion (13) separated from the first portion by a slot (18), the first portions (11) springing the deflection pieces (4) onto the nut part (3), and the second portions (13) holding the clip (6) captively on the deflection pieces (4).

10. Ball screw according to Claim 1 or 8, in which the first and the second portions (11, 13) of the clip legs (10) are provided in each case with introduction slopes (16, 17) for pushing onto the engagements (8) of the deflection pieces (4).

11. Ball screw according to Claim 1 or 7, in which the clips (6) are arranged within an enveloping circle delimited by the outer circumference of the deflection pieces (4).

12. Ball screw according to Claim 1 or 7, in which the clip (6) is produced from a cold-hammered material.

## Revendications

1. Vis à billes, comprenant un écrou de bille (2) disposé sur une broche (1), qui présente une partie d'écrou (3) et une partie de renvoi (4), la partie de renvoi (4) renvoyant des billes d'une extrémité d'un canal de billes (5) sans fin limité par l'écrou de bille (2) et la broche (1) à un début du canal de billes (5), la partie de renvoi (4) étant maintenue sur la partie d'écrou (3) par le biais d'une pince (6), **caractérisée en ce que** la pince (6) présente sur au moins une branche de pince (10) une première portion serrée élastiquement (11) et une deuxième portion (13) séparée de la première portion (11) par une fente (18), la première portion (11) pressant par ressort la partie de renvoi (4) contre la partie d'écrou (3) et la deuxième portion (13) retenant la pince (6) de manière imperdable sur la partie de renvoi (4).

2. Vis à billes selon la revendication 1, dans laquelle la deuxième portion (13) de la branche de pince (10) présente un contour en forme de crochet et vient en prise avec ce contour en forme de crochet autour d'une prise (8) réalisée sur la partie de renvoi (4).

3. Vis à billes selon la revendication 2, dans laquelle, entre des extrémités, tournées l'une vers l'autre sur la périphérie, de deux parties de renvoi (4) disposées l'une derrière l'autre sur la périphérie de la partie d'écrou (3), est à chaque fois formée une fente (9).

4. vis à billes selon la revendication 2, dans laquelle deux parties de renvoi (4) disposées du côté de la périphérie l'une derrière l'autre sont à chaque fois pourvues des prises (8), des pinces (6) disposées de préférence en regard l'une de l'autre sur la périphérie de l'écrou de bille (2) venant en prise avec certaines de leurs branches de pince (10) autour de la prise (8) de l'une des parties de renvoi (4) et avec leurs autres branches (10) autour de la prise (8) de l'autre partie de renvoi (4).

5. vis à billes selon la revendication 4, dans laquelle les premières portions (11) des branches de pince (10) des deux pinces (6) sont serrées élastiquement et viennent en prise autour des prises (8) des parties de renvoi (4), les deux parties de renvoi (4) étant pressées par ressort contre la partie d'écrou (3).

6. Vis à billes selon la revendication 4, dans laquelle les deuxièmes portions (13) des branches de pince (10) des deux pinces (6) s'encliquètent avec leurs contours en forme de crochet avec des cliquets réalisés sur les parties de renvoi (4).

7. Vis à billes, comprenant un écrou de bille (2) disposé sur une broche (1), qui présente une partie d'écrou (3) et une partie de renvoi (4), la partie de renvoi (4) renvoyant des billes d'une extrémité d'un canal de billes (5) sans fin limité par l'écrou de bille (2) et la broche (1) à un début du canal de billes (5), la partie de renvoi (4) étant maintenue sur la partie d'écrou (3) par le biais d'une pince (6), **caractérisée en ce que** deux parties de renvoi (4) disposées l'une derrière l'autre sur la périphérie de la partie d'écrou (3) présentent à leurs extrémités tournées l'une vers l'autre à chaque fois une prise (8), des pinces (6) réparties sur la périphérie de l'écrou de bille (2) venant en prise avec certaines de leurs branches de pince (10) autour de la prise (8) de l'une des parties de renvoi (4) et avec leurs autres branches de pince (10) autour de la prise (8) de l'autre partie de renvoi (4).

8. vis à billes selon la revendication 7, dans laquelle les branches de pince (10) présentent à chaque fois une première portion (11) serrée élastiquement et une deuxième portion (13) séparée de la première portion (11) par une fente (18), les premières portions (11) pressant par ressort les parties de renvoi (4) contre la partie d'écrou (3), et les deuxièmes portions (13) retenant les pinces (6) de manière imperdable contre les parties de renvoi (4).

9. vis à billes selon la revendication 7, dans laquelle les pinces (6) présentent sur leurs branches de pince (10) à chaque fois une première portion (11) serrée élastiquement et une deuxième portion (13) séparée de la première portion par une fente (18), les premières portions (11) pressant par ressort les parties de renvoi (4) contre la partie d'écrou (3), et les deuxièmes portions (13) retenant les pinces (6) de manière imperdable sur les parties de renvoi (4).

10. Vis à billes selon la revendication 1 ou 8, dans laquelle les premières et les deuxièmes portions (11, 13) des branches de pince (10) sont à chaque fois pourvues de biseaux d'insertion (16, 17), pour les pousser sur les prises (8) des parties de renvoi (4).

11. vis à billes selon la revendication 1 ou 7, dans laquelle les pinces (6) sont disposées à l'intérieur d'un cercle d'enveloppe limité par la périphérie extérieure des parties de renvoi (4).

12. Vis à billes selon la revendication 1 ou 7, dans laquelle les pinces (6) sont fabriquées en un matériau de dureté ressort.
